# EUROPÄISCHE PATENTSCHRIFT

(11) **EP 3 609 769 B1**
(45) Veröffentlichungstag und Bekanntmachung des Hinweises auf die Patenterteilung: **31.03.2021**
(21) Anmeldenummer: 18718766.1
(22) Anmeldetag: 11.04.2018
(51) Int. Cl.: B62D 1/16, B62D 5/00, F16H 19/00, F16H 37/12

(54) **LENKSÄULE FÜR KRAFTFAHRZEUGE**
STEERING COLUMN FOR MOTOR VEHICLES
COLONNE DE DIRECTION POUR VÉHICULES À MOTEUR

(30) Priorität: 12.04.2017 DE 102017206276
(43) Veröffentlichungstag der Anmeldung: 19.02.2020
(73) Patentinhaber: thyssenkrupp Presta AG, 9492 Eschen (LI); thyssenkrupp AG, 45143 Essen (DE)
(72) Erfinder: FORTE, Sebastian, 9493 Mauren (LI); GALEHR, Robert, 9486 Schaanwald (LI)
(74) Vertreter: thyssenkrupp Intellectual Property GmbH
(86) Internationale Anmeldenummer: PCT/EP2018/059248
(87) Internationale Veröffentlichungsnummer: WO 2018/189222

(56) Entgegenhaltungen:
- DE-A1- 10 312 516
- US-A- 4 932 511
- US-A1- 2015 142 266

## Beschreibung

Die Erfindung betrifft eine Lenksäule für ein Kraftfahrzeug, umfassend eine um eine Längsachse in einem Lenksäulengehäuse drehbar gelagerte Lenkwelle und einen Umdrehungsbegrenzer.

Derartige Systeme werden besonders bei Steer-by-Wire Lenksystemen eingesetzt.

Steer-by-Wire Lenksäulen zeichnen sich dadurch aus, dass keine mechanische Verbindung zwischen dem Lenkrad und den lenkbaren Rädern existiert. Um die Lenkradrotation jedoch auch ohne mechanische Verbindung zwischen dem Lenkrad und den lenkbaren Rädern zu begrenzen, ist es erforderlich, dass ein Anschlag in Rotationsrichtung vorgesehen ist, der die Rotation des Lenkrades begrenzt. Dabei ist es üblich, dass mehr als eine Umdrehung des Lenkrads erforderlich ist um von Anschlag zu Anschlag zu lenken.

Aus der DE 103 12 516 A1 ist eine Lenksäule mit Umdrehungsbegrenzung bekannt, wobei zwei Scheiben mit jeweils einer Spiralbahn versehen sind und zwischen den Spiralbahnen eine Kugel angeordnet ist. Die Kugel verlagert sich bei der Lenkwellenrotation in den Spiralbahnen. Diese bekannte Lösung hat den Nachteil einer hohen Toleranzanfälligkeit, denn Toleranzen führen dazu, dass die Kugeln in den Spiralbahnen klappern und sich verklemmen können.

Aus der US 2015/142266 A1 ist eine Lenksäule nach dem Oberbegriff des unabhängigen Anspruchs mit einem Umdrehungsbegrenzer bekannt, der eine Steuereinheit und ein Paar gegenüberliegende unidirektionale Bremsanordnungen umfasst, die an einer Lenksäulenpositionserfassungsscheibe montiert sind.

Aufgabe der Erfindung ist es, eine Lenksäule mit Umdrehungsbegrenzer anzugeben, die einen sicheren Betrieb gewährleistet und eine geringe Klapperneigung aufweist.

Gelöst wird die Aufgabe durch die Merkmale des Patentanspruchs 1. Vorteilhafte Ausführungsformen sind in den Unteransprüchen beschrieben.

Bei der erfindungsgemäßen Lenksäule weist der Umdrehungsbegrenzer eine Anschlagscheibe auf, die drehmomentschlüssig mit der Lenkwelle verbunden ist, wobei die Anschlagscheibe mindestens eine sich in Umfangsrichtung erstreckende Ausnehmung aufweist und die Lenkwelle mit einem Hubgetriebe gekoppelt ist, durch welches ein in Richtung der Längsachse verschiebbar und in Umfangsrichtung unverschiebbar gelagerter Anschlagstift in Abhängigkeit vom Drehwinkel der Lenkwelle mit einer der Ausnehmungen in oder außer Eingriff bringbar ist, so dass der Anschlagstift bei Erreichen des zulässigen Drehwinkels der Lenkwelle an einer in Umfangsrichtung liegenden Begrenzung einer Ausnehmung anschlägt und eine weitere Drehung in derselben Drehrichtung verhindert.

Bevorzugt ist die Lenksäule für Steer-by-Wire Lenksystem vorgesehen.

Bevorzugt kann die Anschlagscheibe zwei sich in Umfangsrichtung erstreckende Ausnehmung aufweisen.

Die erfindungsgemäße Lösung hat den Vorteil, dass der Anschlagstift über den größten Bereich des zulässigen Drehwinkels der Lenkwelle außer Eingriff mit der Ausnehmung ist, so dass er mit den Begrenzungen der Ausnehmung nicht in Berührung kommt. Dadurch wird einerseits ein verschleißarmer und über lange Zeiträume sicherer Betrieb gewährleistet und andererseits verhindert, dass im Bereich der im Fahrbetrieb üblichen Lenkwinkel Klappgeräusche in Folge einer Berührung zwischen dem Anschlagstift und den Begrenzungen der Ausnehmungen auftreten können.

Der Begriff "Ausnehmung" umfasst im Rahmen dieser Erfindung sowohl Durchbrüche der Anschlagscheibe als auch in Umfangsrichtung verlaufende Nuten der Anschlagscheibe, in die der Anschlagstift eingreifen und an deren in Umfangsrichtung liegenden Enden der Anschlagstift anschlagen kann, um eine weitere Drehung der Lenkwelle in derselben Drehrichtung zu verhindern. Dabei muss die Anschlagscheibe nicht kreisförmig sein. Insbesondere können die Ausnehmungen auch in Form fehlender Scheibensegmente ausgestaltet sein, so dass die Anschlagscheibe beispielsweise einem Propeller ähnelt.

Der Begriff "Anschlagstift" umfasst im Rahmen dieser Erfindung nicht allein einfache Stifte oder Bolzen, sondern vielmehr auch Haken, Klinken und alle denkbaren Ausführungsformen, die geeignet sind, mit der erfindungsgemäßen Anschlagscheibe zusammenzuwirken, um deren Drehung zu blockieren.

Mit Vorteil ist der Anschlagstift und das Hubgetriebe innerhalb eines Lenksäulengehäuses angeordnet. Ein solches Lenksäulengehäuse ist ohnehin vorhanden und kann deshalb auf einfache Weise erfindungsgemäß modifiziert werden.

Eine vorteilhafte Ausgestaltung der Erfindung sieht vor, dass der Anschlagstift in einer mit dem Lenksäulengehäuse starr verbundenen Hülse oder in einer Bohrung des Lenksäulengehäuses axial verschiebbar gelagert ist. Diese Maßnahme ist mit einfachen Mitteln ausführbar und gewährleistet eine sichere Gleitlagerung des Anschlagstiftes.

In weiterer vorteilhafter Ausgestaltung der Erfindung weist das Hubgetriebe ein Zahnrad auf, welches mit einer Hubkulisse für die Verschiebung des Anschlagstiftes versehen ist. Bei der Hubkulisse handelt es sich um eine mit dem Zahnrad verbundene Scheibe, die in radialer Richtung über den Umfang des Zahnrades hinausragt und so ausgeformt ist, dass ihr radial äußerer Rand eine Wellenform aufweist, die in Abhängigkeit vom Drehwinkel des Zahnrades in Axialrichtung unterschiedliche Positionen einnimmt. Die Wellenform des äußeren Randes umfasst zumindest eine Vertiefung zwischen zwei Erhöhungen, die in Richtung der Längsachse ausgebildet ist. Mit anderen Worten ist die Wellenform eine Kulissenbahn, die im radialen äußeren Bereich des Zahnrades in der axialen Stirnfläche des Zahnrades ausgebildet ist. Wenn die mit dem Hubgetriebe gekoppelte Lenkwelle gedreht wird, dreht sich das Zahnrad und die Hubkulisse mit, wobei die Hubkulisse je nach Position ihres radial äußeren Randes in Abhängigkeit vom Drehwinkel des Zahnrades den Anschlagstift in Axialrichtung verschiebt.

Das Hubgetriebe kann aber auch in linearer Bauform, beispielsweise in Form einer Zahnstange, die mit einer linearen Hubkulisse verbunden ist, ausgestaltet sein.

Mit Vorteil ist der Anschlagstift mit einer umlaufenden Nut versehen, in die Hubkulisse eingreift. Dadurch kann der Anschlagstift mit hoher Präzision sowohl in den axialen Bereich der Ausnehmungen der Anschlagscheibe hinein als auch in Gegenrichtung heraus bewegt werden.

Um ein sicheres Eingreifen des Anschlagstiftes in die jeweilige Ausnehmung der Anschlagscheibe zu gewährleisten, beträgt der Hub des Anschlagstiftes mit Vorteil mehr als 2 mm, vorzugsweise sogar mehr als 3 mm. Bevorzugt ist der Hub kleiner als 20mm. Besonders bevorzugt kleiner als 10mm. Ein größerer Hub als 20mm ist nachteilig für die Auslegung der Kulissengeometrie, da dieser eine hohe Steigung benötigt um den Stift über einen kleinen Winkel in und außer Eingriff zu bringen und somit ein Verkannten des Hubgetriebes begünstigt ist.

In weiterer vorteilhafter Ausgestaltung der Erfindung steht das Zahnrad mit einem Ritzel in Eingriff, wobei das Ritzel mit der Lenkwelle drehmomentschlüssig verbunden ist. Auf diese Weise kann mit einfachsten Mitteln ein Untersetzungsgetriebe realisiert werden, wobei das Untersetzungsverhältnis zwischen Ritzel und Zahnrad mit Vorteil zwischen 2:1 und 4:1 beträgt, vorzugsweise 3:1. Diese Maßnahme gewährleistet, dass das Lenkrad von Anschlag zu Anschlag zwischen zwei und vier Umdrehungen, also aus seiner Mittelstellung zwischen einer und zwei Umdrehungen in jede Drehrichtung ausführen kann. Vorzugsweise beträgt das Untersetzungsverhältnis 3:1, so dass das Lenkrad zwischen den beiden Endanschlägen etwa drei Umdrehungen, also aus der Mittelstellung in jede Drehrichtung etwa 1,5 Umdrehungen machen kann, bevor es an einen der erfindungsgemäßen Drehbegrenzer anschlägt.

Die Erfindung kann mit Vorteil noch verbessert werden, indem das Zahnrad mit der Hubkulisse und der Anschlagstift in einem abnehmbarem Deckelteil des Lenksäulengehäuses gelagert sind. Dieses Deckelteil deckt das dem Lenkrad abgewandte Ende des Lenksäulengehäuses ab, in dem auch die Lenkwelle endet. An diesem Ende der Lenkwelle kann auf einfache Weise das Ritzel für den Antrieb des Hubgetriebes angeordnet sein. Lagert man das Zahnrad exzentrisch zur Drehachse der Lenkwelle im genannten Deckelteil, so kommt das Zahnrad durch das Aufsetzen des Deckelteils auf das Lenksäulengehäuse mit dem Ritzel in Eingriff. Wenn auf der Lenkwelle direkt hinter dem Ritzel die erfindungsgemäße Anschlagscheibe angeordnet ist, kann auch der im benachbarten Deckelteil angeordnete Anschlagstift auf einfache Weise in Eingriff mit den Ausnehmungen der Anschlagscheibe gebracht werden, sobald das Deckelteil mit dem Lenksäulengehäuse verbunden ist.

Mit Vorteil sind die Ausnehmungen der Anschlagscheibe als zwei Langlöcher ausgestaltet, die sich in Umfangsrichtung der Anschlagscheibe über einen Winkelbereich von jeweils 90° bis 160° erstrecken. Dieser Winkelbereich stellt sicher, dass der Anschlagstift aus seiner herausgezogenen Stellung während der Drehung der Anschlagscheibe vollkommen in das vorbeifahrende jeweilige Langloch eingeschoben werden kann, bevor er an die Begrenzung am Ende des Langlochs anschlägt.

Ein Ausführungsbeispiel Erfindung wird nachfolgend anhand der Zeichnungen näher erläutert.

Die Figuren der Zeichnung zeigen im Einzelnen:
- Figur 1:: eine Prinzipdarstellung eines Steer-by-Wire Lenksystems;
- Figur 2:: eine perspektivische Darstellung einer erfindungsgemäßen Lenksäule mit Umdrehungsbegrenzer;
- Figur 3:: eine Teilansicht der Lenksäule von Figur 2 in einer teilweise auseinander gezogenen Darstellung;
- Figur 3a:: Explosionsdarstellung des Umdrehungsbegrenzers;

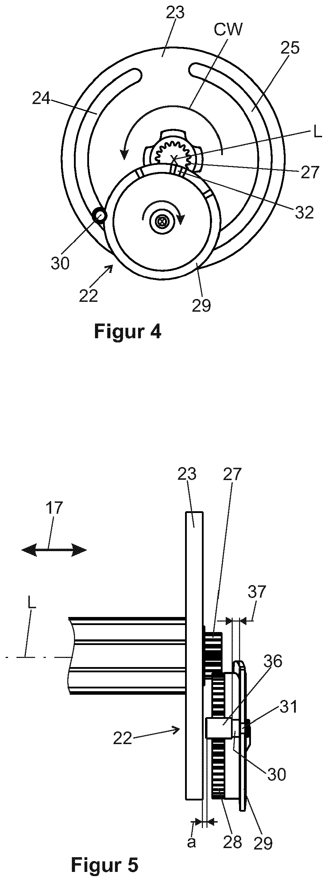

- Figur 4:: eine Draufsicht auf die wesentlichen Bauteile des Umdrehungsbegrenzers;
- Figur 5: eine Seitenansicht der wesentlichen Bauteile des Umdrehungsbegrenzers;
- Figur 6:: eine perspektivische Ansicht der wesentlichen Bauteile des Umdrehungsbegrenzers in einer ersten Bewegungsphase mit Anschlagstift außer Eingriff;
- Figur 7:: wie Figur 6 in einer zweiten Bewegungsphase mit dem Anschlagstift außer Eingriff;
- Figur 8:: wie Figur 6 in einer dritten Bewegungsphase mit dem Anschlagstift in Eingriff.

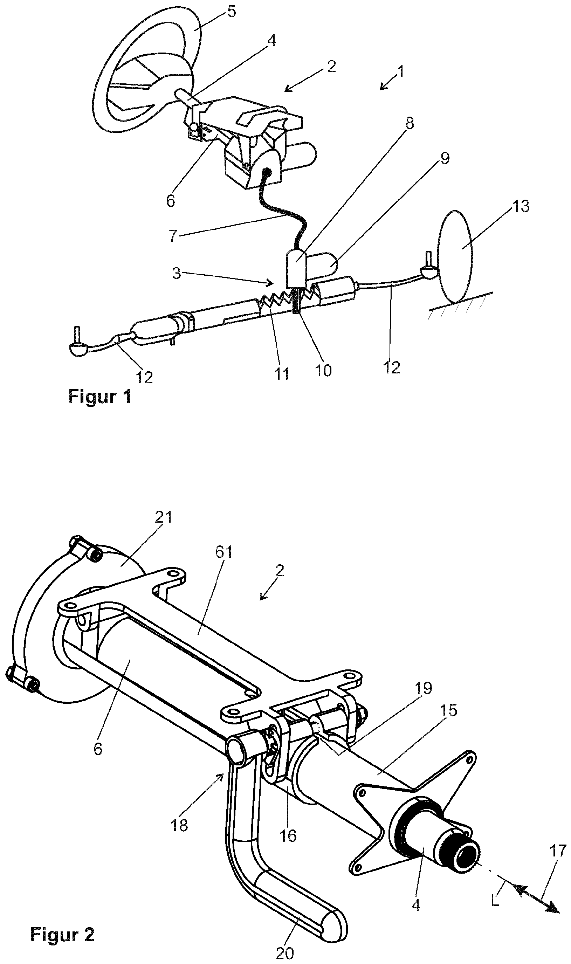

Figur 1 zeigt ein Steer-by-Wire Lenksystem 1 für ein Kraftfahrzeug mit einer Lenksäule 2 und einer Lenkbetätigung 3. Die Lenksäule 2 umfasst eine Lenkwelle 4, die an einem Ende ein Lenkrad 5 trägt und die zum größten Teil in einem Lenksäulengehäuse 6 angeordnet ist, in welchem ein nicht gezeigter Drehgeber für die elektronische Ansteuerung der elektrischen Lenkbetätigung 3 untergebracht ist. Weiterhin ist im Lenksäulengehäuse 6 ein sogenannter Handmomentensteller untergebracht, der den Fahrer eine Rückmeldung über die Fahrsituation in Form eines in die Lenkwelle 4 eingetragenen Drehmoments gibt. Über ein Verbindungskabel 7 ist die Lenksäule 2 mit der Lenkbetätigung 3 verbunden. Diese umfasst ein Lenkbetätigergehäuse 8 mit einem Lenkmotor 9, der ein Ritzel 10 antreibt, welches seinerseits in Eingriff mit einer Zahnstange 11 steht, die auf zwei Spurstangen 12 einwirkt, mit denen die Fahrzeugräder 13 verschwenkt werden können. Im Lenkbetätigergehäuse 8 ist ein nicht gezeigter Drehmomentaufnehmer untergebracht, der das für die Verschwenkung der Fahrzeugräder 13 erforderliche Drehmoment misst und als Rückmeldung für den Fahrer an die Lenksäule 2 weiterleitet.

Figur 2 zeigt einen wesentlichen Teil der Lenksäule 2 mit dem Lenksäulengehäuse 6, in dem die Lenkwelle 4 drehbar gelagert ist. Das Lenksäulengehäuse 6 ist verschwenkbar an einer Trageinheit 61 gehalten, wobei die Trageinheit 61 mit einem Fahrzeug verbindbar ist. Die Lenksäule 2 umfasst ein inneres Mantelteil 15, in welchem die Lenkwelle 4 drehbar gelagert ist, wobei das innere Mantelteil 15 gegenüber einem äußeren Mantelteil 16 in Richtung der Längsachse L , auch als Axialrichtung 17 bezeichnet, verschoben werden kann. Zur Fixierung des inneren Mantelteils 15 im äußeren Mantelteil 16 ist eine Zuspannvorrichtung 18 vorgesehen, die das mit einem Schlitz 19 versehene äußere Mantelteil 16 zusammenspannt so dass das innere Mantelteil 15 im äußeren Mantelteil 16 festgeklemmt ist. Zum Spannen und Lösen der Zuspannvorrichtung 18 ist ein Bedienungshebel 20 vorgesehen. Das Lenksäulengehäuse 6 hat einen dem Lenkrad 5 abgewandten Endabschnitt 21, in welchem der erfindungsgemäße Umdrehungsbegrenzer 22 untergebracht ist.

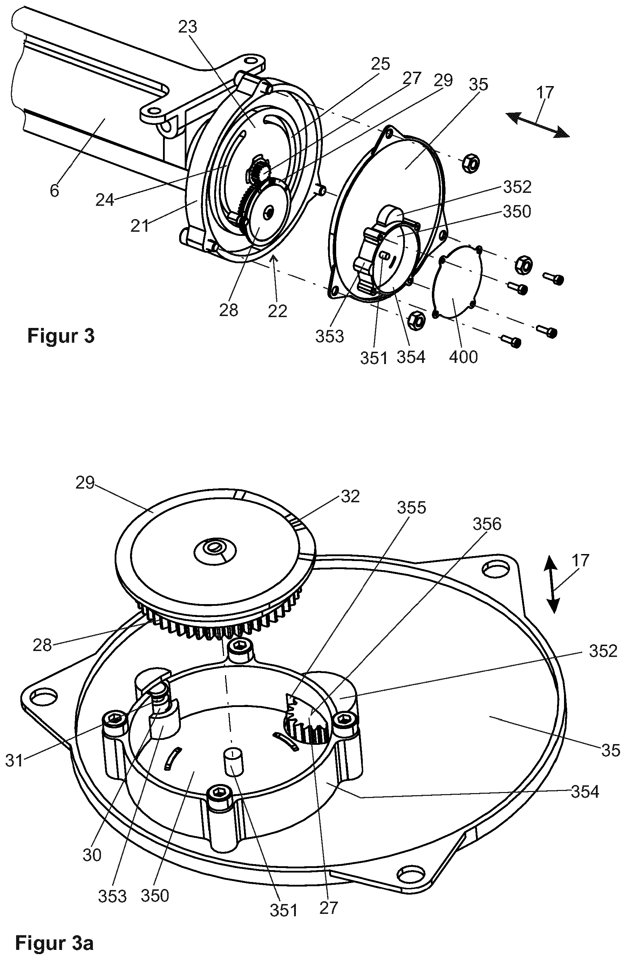

Wie der Umdrehungsbegrenzer 22 im Endabschnitt 21 angeordnet ist, zeigt Figur 3. Eine Anschlagscheibe 23 sitzt direkt auf der Lenkwelle 4 und ist im Bereich des Endabschnitts der Lenkwelle 4 drehmomentschlüssig mit dieser verbunden. Die Anschlagscheibe 23 weist zwei in Umfangsrichtung verlaufende, als Langlöcher ausgebildete Ausnehmungen 24, 25 auf. Des Weiteren ist am Ende der Lenkwelle 4 ein Ritzel 27 angeordnet, welches mit der Lenkwelle 4 drehmomentschlüssig verbunden ist. Das Ritzel 27 ist mit einem exzentrisch im Lenksäulengehäuse 6 gelagerten Zahnrad 28 in Eingriff, welches zusammen mit dem Ritzel 27 ein Untersetzungsgetriebe 26 bildet. Das Untersetzungsverhältnis beträgt beim vorliegenden Ausführungsbeispiel 3:1, es kann aber mit Vorteil auch im Bereich zwischen 2:1 und 4:1 liegen.

Das Zahnrad 28 ist mit einer Hubkulisse 29 drehmomentschlüssig verbunden. Die Hubkulisse 29 umfasst eine Scheibe, deren Durchmesser größer ist als das Zahnrad 28, so dass sie in radialer Richtung über den Außenumfang des Zahnrades 28 hinausragt. Bevorzugt ist das Zahnrad 28 und die Hubkulisse 29 ein einstückiges integrales Bauteil. Die Hubkulisse 29 ist an ihrem umfangsmäßig äußeren Randbereich in Axialrichtung 17, d.h. in Richtung der Längsachse L, gesehen wellenförmig gebogen. Der äußere Randbereich der Hubkulisse 29 ist in Eingriff mit einem Anschlagstift 30, der mittels einer Hülse 36 im Lenksäulengehäuse 6 in Axialrichtung 17 verschiebbar, in Umfangsrichtung aber unverschiebbar gelagert ist. Der Anschlagstift 30 ist mit einer umlaufenden Nut 31 versehen, in welche die Hubkulisse 29 eingreift.

Wie in Figur 3 und Figur 3a besonders gut zu erkennen ist, ist das Zahnrad 28 mit Hubkulisse 29 als auch der Anschlagstift 30 in einem abnehmbarem Deckelteil 35 des Lenksäulengehäuses 6 gelagert. Das Zahnrad 28 ist in einer verschließbaren Öffnung 350 des Deckelteils 35 angeordnet, wobei das Zahnrad 28 auf einem Achszapfen 351 drehbar gelagert ist, wobei ein Deckel 400 die Öffnung 350 verschließt. Durch den Deckel 400 ist das Zahnrad 28 gegen eine Verschiebung in Richtung der Längsachse L, d.h. gegen eine Verschiebung auf dem Achszapfen 351, gesichert. Die Öffnung 350 ist durch einen Wandung 354, die sich in Axialrichtung 17 erstreckt, begrenzt. Das Deckelteil 35 umfasst eine Erhebung 352, die radial außen neben der Wandung 354 ausgebildet ist und eine Aufnahmeöffnung 355 bildet, in der das Ritzel 27 angeordnet ist. Zwischen der Erhebung 352 und dem Rand 354 existiert ein radialer Durchbruch 356, wodurch die Öffnung 350 und die Aufnahmeöffnung 355 des Ritzels 27 miteinander verbunden sind, so dass das Ritzel 27 und das Zahnrad 28 in Eingriff sind. Die Wandung 354 umfasst einen Aufnahmeabschnitt 353, in dem der Anschlagstift 30 verschiebbar gehalten ist. Dadurch wird die exzentrische Anordnung von Zahnrad 28, Hubkulisse 29 und Anschlagstift 30 auf einfache Weise möglich.

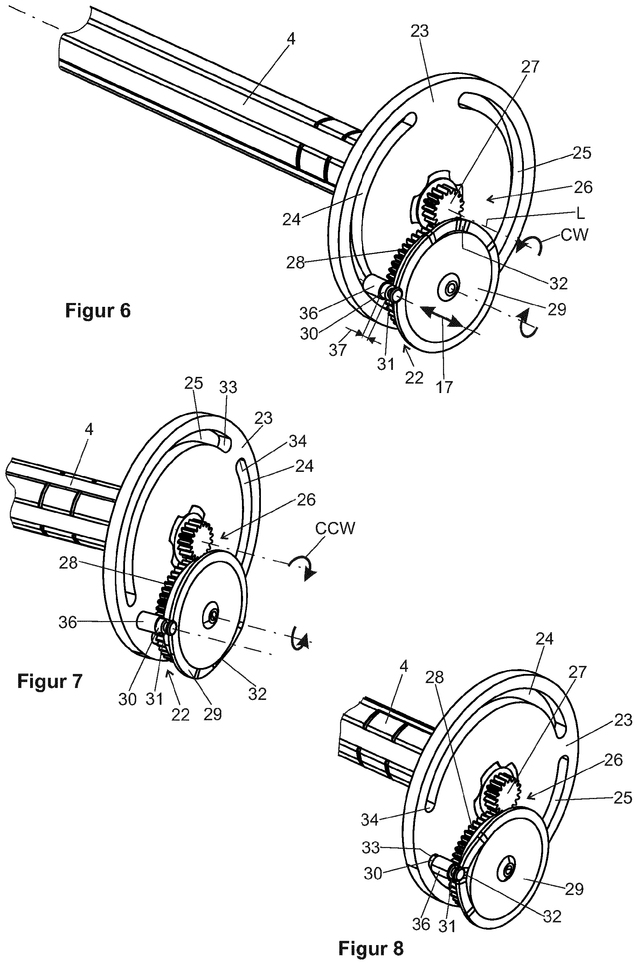

Dreht der Fahrer am Lenkrad 5, so treibt die mit dem Lenkrad 5 verbundene Lenkwelle 4 das Ritzel 27 und das Zahnrad 28 an. Der in Eingriff mit der Hubkulisse 29 stehende Anschlagstift 30 folgt in Axialrichtung 17 der axialen Position des äußeren Randes der Hubkulisse 29. Der äußere Rand der Hubkulisse 29 ist über den größten Teil des Umfangs in einer axialen Position, bei der der Anschlagstift 30 im Abstand a zur Anschlagscheibe 23 gehalten wird. Nur in einem kleinen Umfangsbereich ist der äußere Rand der Hubkulisse 29 axial in Richtung der Anschlagscheibe 23 geformt, wodurch sich auch der Anschlagstift 30 auf die Anschlagscheibe 23 zu bewegt, bis an einer Stelle 32 des Umfangsbereichs eine Position erreicht ist, bei der der Anschlagstift 30 in eine der beiden als Langlöcher ausgebildeten Ausnehmungen 24, 25 der Anschlagscheibe 23 eingreift. Diese Situation ist in Figur 8 dargestellt. Wenn der Fahrer jetzt versuchen sollte, das Lenkrad 5 im Uhrzeigersinn CW weiter zu drehen, kommt eine Begrenzung 33 des Langlochs 25 in Berührung mit dem Anschlagstift 30, der eine weitere Drehung der Lenkwelle 4 verhindert. Während des beschriebenen Vorgangs beträgt der maximale Hub 37 des Anschlagstiftes 30 etwa 3 mm. Der maximale Hub 37 ist mindestens doppelt so groß wie der Abstand a. Dadurch kann ein sicherer Eingriff des Anschlagstiftes 30 in die Ausnehmungen 24, 25 gewährleistet werden.

Dreht der Fahrer jetzt das Lenkrad 5 im Gegenuhrzeigersinn CCW, so hat sich nach etwa einer halben Umdrehung der Lenkwelle 4 das Zahnrad 28 mit der Hubkulisse 29 um etwa 1/6 Umdrehung, also um ca. 60° verdreht, so dass die Stelle 32 des Umfangsbereichs der Hubkulisse 29 die in Figur 7 gezeigte Stellung einnimmt. An der Position des Anschlagstifts 30 befindet sich jetzt der größere Umfangsbereich der Hubkulisse 29, der einen größeren Abstand von der Anschlagscheibe 23 in Axialrichtung 17 aufweist. Dadurch wurde der Anschlagstift 30 in Axialrichtung 17 verschoben und außer Eingriff mit der Anschlagscheibe 23 gebracht. In dieser Position bleibt der Anschlagstift 30 auch dann noch, wenn das Lenkrad 5 und die Lenkwelle 4 weitere zwei Umdrehungen im Gegenuhrzeigersinn machen.

Die Drehrichtungen Uhrzeigersinn CW und Gegenuhrzeigersinn CCW beziehen sich immer auf die Drehrichtung des Lenkrades 5 aus der Perspektive des Fahrzeugführers.

Erst bei einer weiteren halben Umdrehung der Lenkwelle 4 nähert sich die Stelle 32 des Umfangsbereichs der Hubkulisse 29 wieder an die Position des Anschlagstiftes 30 an, wobei sich der Anschlagstift 30 in Axialrichtung 17 auf die Anschlagscheibe 23 zu bewegt. Dort taucht er in das Langloch 24 ein und kommt somit in Eingriff mit der Anschlagscheibe 23. Sobald eine Begrenzung 34 des Langlochs 24 mit dem Anschlagstift 30 in Berührung kommt, wird die Drehung der Lenkwelle 4 in Gegenuhrzeigersinn CCW gestoppt.

Somit bildet die Begrenzung 34 einen linken Anschlag für die Drehbewegung des Lenkrads 5 und der Lenkwelle 4 und die Begrenzung 33 des Langlochs 25 bildet einen rechten Anschlag für die Drehbewegung, wobei zwischen den beiden Anschlägen nahezu 3 Umdrehungen des Lenkrads 5 und der Lenkwelle 4 möglich sind.

Ermöglicht wird dies durch das Zusammenwirken des Zahnrads 28 mit der Hubkulisse 29 und dem Anschlagstift 30, die zusammen ein Hubgetriebe 28, 29, 30 bilden.

Das Übersetzungsverhältnis des Untersetzungsgetriebes 26 bestimmt dabei, wie viele Umdrehungen des Lenkrads 5 zwischen den beiden Drehanschlägen möglich sind. Weiterhin wird der zwischen den beiden Endanschlägen mögliche Drehwinkel des Lenkrads 5 auch durch die Ausdehnung der Langlöcher 24, 25 in Umfangsrichtung der Anschlagscheibe 23 bestimmt.

Um einen zuverlässigen Eingriff des Anschlagstifts 30 in die Langlöcher 24, 25 der Anschlagscheibe 23 zu gewährleisten, muss die Hubkulisse 29 so ausgeformt sein, dass der Hub 37 des Anschlagstifts 30 in Axialrichtung 17 mindestens 2 mm, besser noch mehr als 3 mm beträgt.

Die erfindungsgemäße Ausführungsform eines Umdrehungsbegrenzers zeichnet sich durch einen geräuscharmen Betrieb aus und erlaubt größere Fertigungstoleranzen ohne Beeinträchtigung ihrer Funktion.

### BEZUGSZEICHENLISTE

- 1.: Steer-by-Wire Lenksystem
- 2.: Lenksäule
- 3.: Lenkbetätigung
- 4.: Lenkwelle
- 5.: Lenkrad
- 6.: Lenksäulengehäuse
- 7.: Verbindungskabel
- 8.: Lenkbetätigergehäuse
- 9.: Lenkmotor
- 10.: Ritzel
- 11.: Zahnstange
- 12.: Spurstange
- 13.: Fahrzeuggrad
- 14.: Spannvorrichtung
- 15.: inneres Mantelteil
- 16.: äußeres Mantelteil
- 17.: Axialrichtung
- 18.: Zuspannvorrichtung
- 19.: Schlitz
- 20.: Bedienhebel
- 21.: Endabschnitt
- 22.: Umdrehungsbegrenzer
- 23.: Anschlagscheibe
- 24.: Ausnehmung / Langloch
- 25.: Ausnehmung / Langloch
- 26.: Untersetzungsgetriebe
- 27.: Ritzel
- 28.: Zahnrad
- 29.: Hubkulisse
- 30.: Anschlagstift
- 31.: Nut
- 32.: Stelle des Umfangsbereichs
- 33.: Begrenzung
- 34.: Begrenzung
- 35.: Deckelteil
- 36.: Hülse
- 37.: Hub

## Patentansprüche

1. Lenksäule für ein Kraftfahrzeug, umfassend eine um eine Längsachse (L) in einem Lenksäulengehäuse (6) drehbar gelagerte Lenkwelle (4) und einem Umdrehungsbegrenzer (22), wobei der Umdrehungsbegrenzer (22) eine Anschlagscheibe (23) aufweist, die drehmomentschlüssig mit der Lenkwelle (4) verbunden ist, **dadurch gekennzeichnet, , dass** die Anschlagscheibe (23) mindestens eine sich in Umfangsrichtung erstreckende Ausnehmung (24, 25) aufweist, dass die Lenkwelle (4) mit einem Hubgetriebe (28, 29, 30) gekoppelt ist, durch welches ein in Richtung der Längsachse (L) verschiebbar und in Umfangsrichtung unverschiebbar gelagerter Anschlagstift (30) in Abhängigkeit vom Drehwinkel der Lenkwelle (4) mit der Ausnehmung (24, 25) in Eingriff bringbar ist, so dass der Anschlagstift (30) bei Erreichen des zulässigen Drehwinkels der Lenkwelle (4) an einer in Umfangsrichtung liegenden Begrenzung (34, 35) einer Ausnehmung (24, 25) anschlägt und eine weitere Drehung in derselben Drehrichtung verhindert.

2. Lenksäule nach Anspruch 1, **dadurch gekennzeichnet, dass** der Anschlagstift (30) und das Hubgetriebe (28, 29) innerhalb eines Lenksäulengehäuses (6) angeordnet sind.

3. Lenksäule nach Anspruch 2, **dadurch gekennzeichnet, dass** der Anschlagstift (30) in einer mit dem Lenksäulengehäuse (6) starr verbundenen Hülse (36) oder in einer Bohrung des Lenksäulengehäuses (6) axial verschiebbar gelagert ist.

4. Lenksäule nach einem der vorhergehenden Ansprüche, **dadurch gekennzeichnet, dass** das Hubgetriebe (28, 29, 30) ein Zahnrad (28) aufweist, welches mit einer Hubkulisse (29) für die Verschiebung des Anschlagstiftes (30) versehen ist.

5. Lenksäule nach Anspruch 4, **dadurch gekennzeichnet, dass** der Anschlagstift (30) mit einer umlaufenden Nut (31) versehen ist, in die die Hubkulisse (29) eingreift.

6. Lenksäule nach einem der Ansprüche 4 oder 5, **dadurch gekennzeichnet, dass** der Hub (37) des Anschlagstiftes (30) mehr als 2 mm beträgt.

7. Lenksäule nach einem der Ansprüche 4 bis 6, **dadurch gekennzeichnet, dass** das Zahnrad (28) mit einem Ritzel (27) in Eingriff steht, wobei das Ritzel (27) mit der Lenkwelle (4) drehmomentschlüssig verbunden ist.

8. Lenksäule nach Anspruch 7, **dadurch gekennzeichnet, dass** das Untersetzungsverhältnis zwischen Ritzel (27) und Zahnrad (28) zwischen 2:1 und 4:1 beträgt.

9. Lenksäule nach einem der Ansprüche 4 bis 8, **dadurch gekennzeichnet, dass** das Zahnrad (28) mit der Hubkulisse (29) und der Anschlagstift (30) in einem abnehmbaren Deckelteil (35) des Lenksäulengehäuses (6) gelagert sind.

10. Lenksäule nach einem der vorhergehenden Ansprüche, **dadurch gekennzeichnet, dass** die Ausnehmungen (24, 25) als zwei Langlöcher ausgestaltet sind, die sich in Umfangsrichtung der Anschlagscheibe (23) über einen Winkelbereich von jeweils 90° bis 160° erstrecken.

## Claims

1. A steering column for a motor vehicle, comprising a steering shaft (4) which is mounted in a steering column housing (6) so as to be rotatable about a longitudinal axis (L), and a rotation limiter (22), wherein the rotation limiter (22) comprises a stop disk (23) which is connected to the steering shaft (4) so as to transmit torque, **characterized in that** the stop disk (23) comprises at least one recess (24, 25) extending in the circumferential direction, **in that** the steering shaft (4) is coupled to a lifting mechanism (28, 29, 30), by means of which a stop pin (30), which is mounted displaceably in the direction of the longitudinal axis (L) and non-displaceably in the circumferential direction, can be brought into engagement with the recess (24, 25) depending on the rotational angle of the steering shaft (4) such that, when the permitted rotational angle of the steering shaft (4) is reached, the stop pin (30) strikes against a boundary (34, 35) of a recess (24, 25), said boundary lying in the circumferential direction, and prevents further rotation in the same direction of rotation.

2. The steering column as claimed in claim 1, **characterized in that** the stop pin (30) and the lifting mechanism (28, 29) are arranged within a steering column housing (6).

3. The steering column as claimed in claim 2, **characterized in that** the stop pin (30) is mounted in an axially displaceable manner in a sleeve (36), which is connected rigidly to the steering column housing (6), or in a bore of the steering column housing (6).

4. The steering column as claimed in one of the preceding claims, **characterized in that** the lifting mechanism (28, 29, 30) comprises a gear wheel (28) which is provided with a lifting slot (29) for the displacement of the stop pin (30).

5. The steering column as claimed in claim 4, **characterized in that** the stop pin (30) is provided with an encircling groove (31) in which the lifting slot (29) engages.

6. The steering column as claimed in either of claims 4 and 5, **characterized in that** the lift (37) of the stop pin (30) is more than 2 mm.

7. The steering column as claimed in one of claims 4 to 6, **characterized in that** the gear wheel (28) is in engagement with a pinion (27), wherein the pinion (27) is connected to the steering shaft (4) so as to transmit torque.

8. The steering column as claimed in claim 7, **characterized in that** the reduction ratio between pinion (27) and gear wheel (28) is between 2:1 and 4:1.

9. The steering column as claimed in one of claims 4 to 8, **characterized in that** the gear wheel (28) with the lifting slot (29) and the stop pin (30) are mounted in a removable cover part (35) of the steering column housing (6).

10. The steering column as claimed in one of the preceding claims, **characterized in that** the recesses (24, 25) are configured as two elongated holes which extend in the circumferential direction of the stop disk (23) over an angular range of in each case 90° to 160°.

## Revendications

1. Colonne de direction pour un véhicule automobile, comprenant un arbre de direction (4) supporté à rotation autour d'un axe longitudinal (L) dans un boîtier de colonne de direction (6) et un limiteur de rotation (22), le limiteur de rotation (22) présentant un disque de butée (23) qui est connecté par engagement de couple à l'arbre de direction (4), **caractérisée en ce que** le disque de butée (23) présente au moins un évidement (24, 25) s'étendant dans la direction périphérique, **en ce que** l'arbre de direction (4) est accouplé à un mécanisme de levage (28, 29, 30), par lequel une goupille de butée (30) déplaçable dans la direction de l'axe longitudinal (L) et supportée de manière non déplaçable dans la direction périphérique peut être amenée en prise avec l'évidement (24, 25) en fonction de l'angle de rotation de l'arbre de direction (4), de telle sorte que la goupille de butée (30), une fois que l'angle de rotation admissible de l'arbre de direction (4) est atteint, bute contre une limitation (34, 35) d'un évidement (24, 25) située dans la direction périphérique et empêche une rotation supplémentaire dans la même direction de rotation.

2. Colonne de direction selon la revendication 1, **caractérisée en ce que** la goupille de butée (30) et le mécanisme de levage (28, 29) sont disposés à l'intérieur d'un boîtier de colonne de direction (6) .

3. Colonne de direction selon la revendication 2, **caractérisée en ce que** la goupille de butée (30) est supportée de manière déplaçable axialement dans une douille (36) connectée rigidement au boîtier de colonne de direction (6) ou dans un alésage du boîtier de colonne de direction (6).

4. Colonne de direction selon l'une quelconque des revendications précédentes, **caractérisée en ce que** le mécanisme de levage (28, 29, 30) présente une roue dentée (28) qui est pourvue d'une coulisse de levage (29) pour le déplacement de la goupille de butée (30).

5. Colonne de direction selon la revendication 4, **caractérisée en ce que** la goupille de butée (30) est pourvue d'une rainure périphérique (31) dans laquelle s'engage la coulisse de levage (29).

6. Colonne de direction selon l'une quelconque des revendications 4 et 5, **caractérisée en ce que** la course de levage (37) de la goupille de butée (30) est supérieure à 2 mm.

7. Colonne de direction selon l'une quelconque des revendications 4 à 6, **caractérisée en ce que** la roue dentée (28) est en prise avec un pignon (27), le pignon (27) étant connecté par engagement de couple avec l'arbre de direction (4).

8. Colonne de direction selon la revendication 7, **caractérisée en ce que** le rapport de démultiplication entre le pignon (27) et la roue dentée (28) est compris entre 2:1 et 4:1.

9. Colonne de direction selon l'une quelconque des revendications 4 à 8, **caractérisée en ce que** la roue dentée (28) avec la coulisse de levage (29) et la goupille de butée (30) sont supportées dans une partie de couvercle amovible (35) du boîtier de colonne de direction (6).

10. Colonne de direction selon l'une quelconque des revendications précédentes, **caractérisée en ce que** les évidements (24, 25) sont réalisés sous forme de deux trous oblongs qui s'étendent dans la direction périphérique du disque de butée (23) à chaque fois sur une plage angulaire de 90° à 160°.
